# EUROPEAN PATENT APPLICATION

(11) **EP 2 705 781 A1**
(43) Date of publication of application: **12.03.2014**
(21) Application number: 13183920.1
(22) Date of filing: 11.09.2013
(51) Int. Cl.: A47J 31/20

(54) **French press beverage maker**

(30) Priority: 11.09.2012 US 201213609770
(71) Applicant: Pacific Market International, LLC, Seattle, Washington 98121 (US)
(72) Inventor: Madden, Jeffery D., Fredericton, New Brunswick E3A 9J9 (CA)
(74) Representative: Eisenführ Speiser

(57) **Abstract**

A beverage maker for brewing a beverage utilizing a brewing material pod (150) that includes an interior portion having a filter (151) and a brewing material (153). The beverage maker includes a container (18) having a bottom portion (30) and a sidewall forming a cavity, and a top-opening mouth for receiving a quantity of a liquid into the cavity. The beverage maker also includes a cap (14) sized to fit over the mouth of the container. A plunger assembly (80) is coupled to the cap and includes a cavity configured for selective receipt of the brewing material pod (150). The plunger assembly includes punches (93,132) that puncture the brewing material pod to provide a flow path therethrough. A user may brew a beverage by filling the container with hot liquid, and pressing the plunger assembly including the brewing material pod downward through the hot liquid.

## Description

### FIELD OF THE INVENTION

The present invention relates generally to beverage makers, and more specifically, to beverage makers for making coffee, tea, or other beverages using brewing material pods containing a loose material, and a hot liquid.

### BACKGROUND OF THE INVENTION

The following description includes information that may be useful in understanding the present invention. It is not an admission that any of the information provided herein is prior art or relevant to the presently claimed invention, or that any publication specifically or implicitly referenced is prior art.

A modern French press consists of a narrow cylindrical container usually made of glass or clear plastic, equipped with a lid and a plunger. The plunger is made of metal or plastic that fits tightly in the cylindrical container and has a fine wire or nylon mesh filter. A French press requires coffee of a coarser grind than does a drip brew coffee filter, as finer grounds will seep through the press filter and into the coffee. Coffee is brewed by placing the coffee and water together, inserting the plunger into the container, stirring it and leaving to brew for a few minutes, then pressing the plunger downward to trap the coffee grounds at the bottom of the container.

French presses are more portable and self-contained than other coffee makers. Travel mug versions exist, which are made of tough plastic instead of the more common glass, and have a sealed lid with a closable drinking hole. Some versions are marketed to hikers and backpackers not wishing to carry a heavy, metal percolator or a filter using drip brew. Other versions include stainless steel, insulated presses designed to keep the coffee hot, similar in design to insulated flasks.

Pods, capsules, and bags including brewing material and a filter can both reduce the time needed to brew coffee and simplify the brewing process by eliminating the need to measure out portions, flavorings, and additives from large bulk containers. They can also help to keep the unused product fresher by individually packaging portions separately without exposing the entire supply batch to air and light.

A popular type of brewing machine that operates using brewing material pods is the K-Cup® system offered by Keurig, Inc. The K-Cup® systems are designed to brew a single cup of coffee, tea, hot chocolate, or other hot beverage. The grounds (or other brewing material) are supplied in a prepared, single-serving brewing material pod, called a K-Cup® pack, or simply "K-Cup." Once the machine has warmed up, the user inserts a K-Cup pack into the machine, places a mug under a spout, and presses the brew button. Within a short period of time (e.g., 20 to 60 seconds), the beverage is ready for consumption.

In operation, Keurig's machines brew coffee or tea by piercing a foil seal on top of the plastic K-Cup pack with a spray nozzle, while simultaneously piercing the bottom of the K-Cup pack with a discharge nozzle. Coffee or tea material contained inside the K-Cup pack sits within a paper filter. A measured quantity of hot water is forced through the K-Cup pack, passing through the material and through the filter into the waiting cup or mug below.

### BRIEF DESCRIPTION OF THE DRAWINGS

Exemplary embodiments are illustrated in the referenced figures. It is intended that the embodiments and figures disclosed herein are to be considered illustrative rather than restrictive.
Figure 1 illustrates a perspective view of a beverage maker according to an embodiment of the present invention.
Figure 2 illustrates a perspective view of the beverage maker when a press thereof is separated from the container.
Figure 3A illustrates a first bottom perspective view of a plunger and a plunger lid of the beverage maker.
Figure 3B illustrates a second bottom perspective view of the plunger and the plunger lid.
Figure 4 illustrates an enlarged bottom perspective view of the plunger and the plunger lid.
Figure 5 illustrates a perspective view of the beverage maker with the plunger disposed in a raised or starting position.
Figure 6 illustrates a perspective view of the beverage maker with the plunger disposed in a position midway between the raised position and a lowered or ending position.
Figure 7A illustrates a top view of the beverage maker.
Figure 7B illustrates a left-side sectional view of the beverage maker taken substantially along the line 7B-7B of Figure 7A when the plunger is in the lowered position.
Figure 8A illustrates a left-side sectional view of the beverage maker taken substantially along the line 8A-8A of Figure 7A when the plunger is disposed in a position midway between the raised position and the lowered position and is moving toward the lowered position during a brewing process.
Figure 8B illustrates a left-side sectional view of the beverage maker taken substantially along the line 8B-8B of Figure 7A when the plunger is disposed in a position midway between the raised position and the lowered position and is moving toward the raised position when the plunger is being removed from the container of the beverage maker.
Figure 9 illustrates an enlarged top perspective view of a plunger and a plunger lid of a beverage maker according to a second embodiment.
Figure 10 illustrates a bottom perspective view of the plunger shown in Figure 9.

### DESCRIPTION OF THE INVENTION

One skilled in the art will recognize many methods, systems, and materials similar or equivalent to those described herein, which could be used in the practice of the present invention. Indeed, the present invention is in no way limited to the methods, systems, and materials described.

Embodiments of the present invention are directed to systems and methods for providing a cost effective, portable, and easy to use manual beverage maker that is operative to utilize commercially available brewing material pods, such as K-Cup packs, to make coffee, tea, and other beverages.

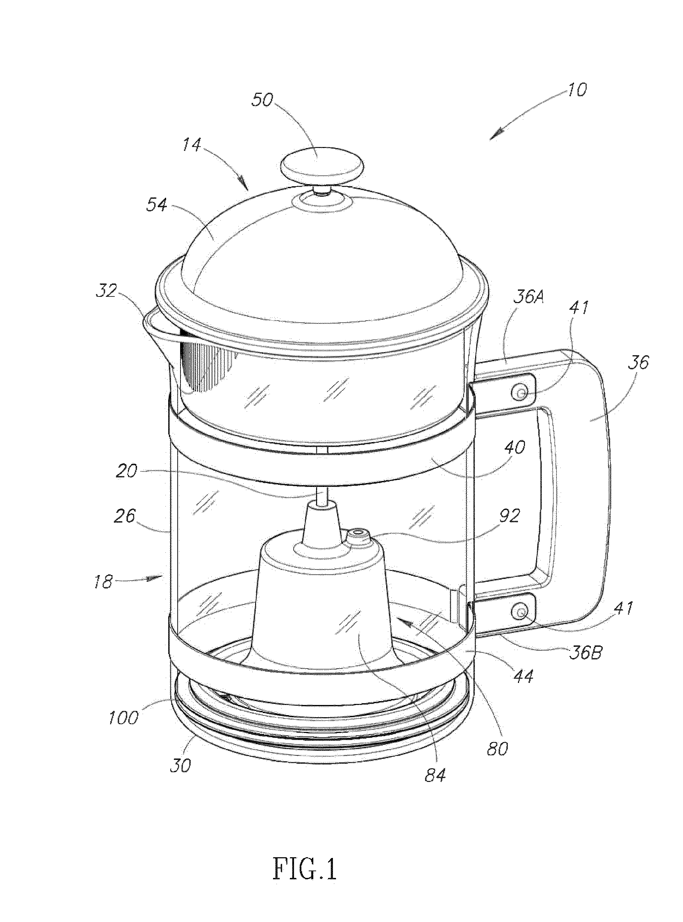

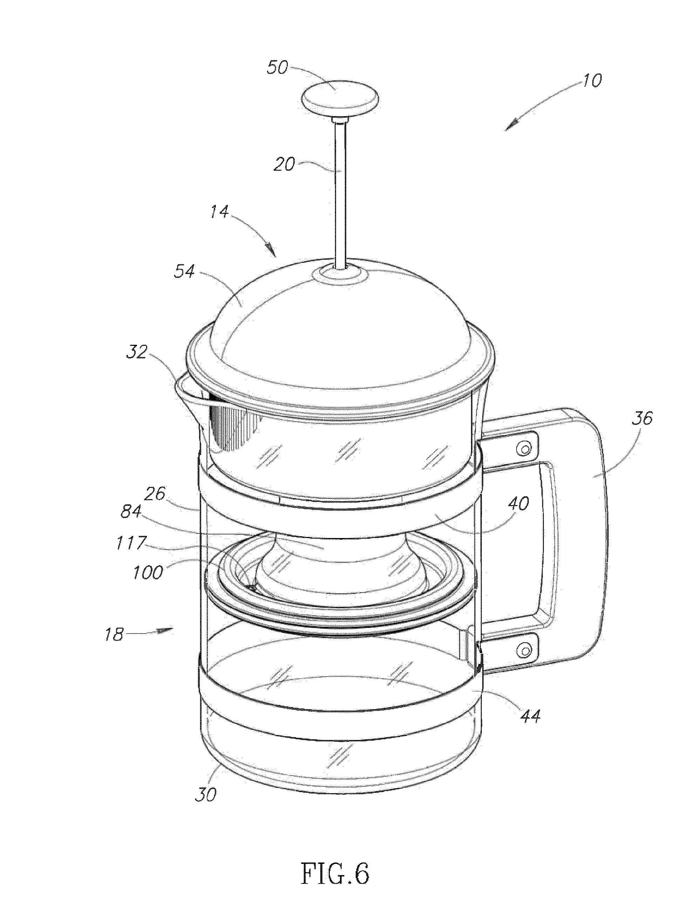

A first embodiment of a beverage maker 10, including a container 18 in which a beverage is made, is illustrated in Figures 1-8B. The beverage maker 10 may be used for making coffee, tea, and other beverages. As shown in Figure 1, the container 18 includes a generally cylindrical sidewall 26 and a generally circular bottom wall 30, although other shapes may be used as well. The container 18 includes an open top or mouth 58 having a pouring lip or spout 32 that facilitates easy pouring of a beverage from the container 18. The container 18 may be formed from any suitable material, such as glass, plastic, etc.

The container 18 also includes a handle 36 that makes the container 18 easier for a user to hold when transporting the beverage maker 10 or pouring a beverage. An upper handle band 40 and a lower handle band 44 each extend around the outer surface of the cylindrical sidewall 26 and are coupled to the handle 36 at an upper portion 36A and a lower portion 36B, respectively, by bolts 41. The handle 36 and handle bands 40, 44 may be formed from any suitable material, such as plastic, metal, a combination thereof, or other materials.

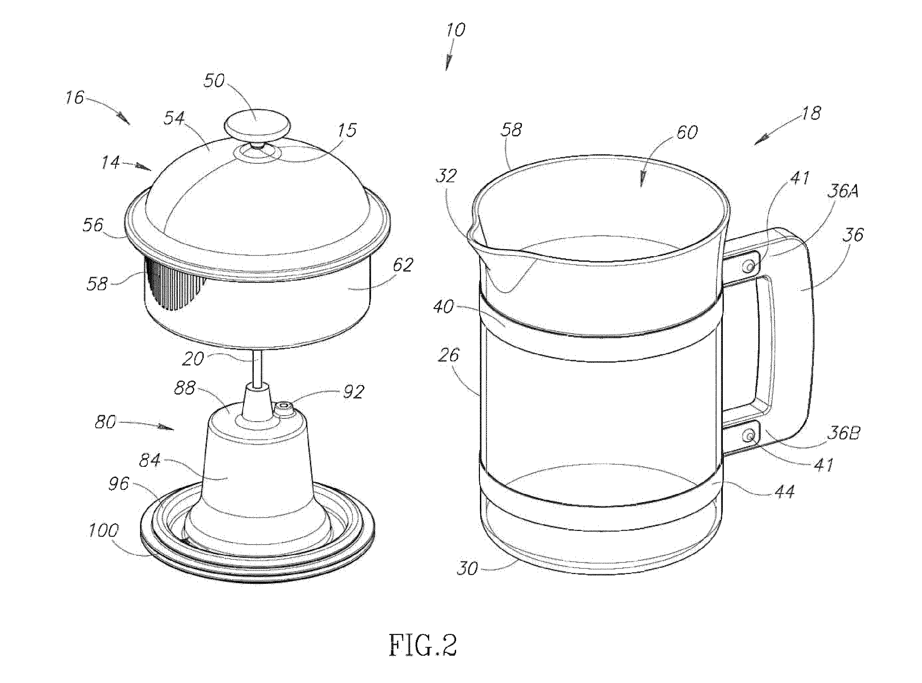

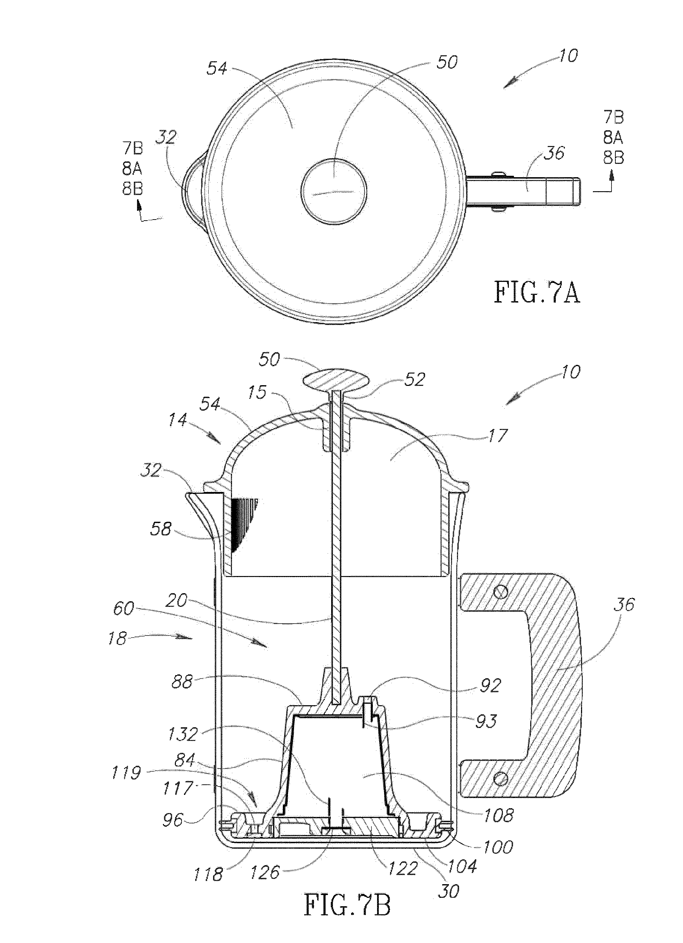

Referring to Figure 2, the beverage maker 10 also comprises a press 16 that is slidably mountable within the container 18. The press 16 includes a generally cylindrically shaped top or cap 14 comprising an upper portion 54 and a downwardly extending cylindrical wall or lip 62 that is sized to fit into the mouth 58 of the container 18. The cylindrical lip 62 may be sized to fit closely within the mouth 58, thus forming a substantial seal between the lip and the mouth of the container 18. As shown, the upper portion 54 of the cap 14 arches upward toward the center to form a cavity 17 (see Figure 7B) within the interior of the cap.

The cap 14 has an aperture 15 formed in the center of the cap 14. The press 16 includes a knob 50 positioned outside and above the cap 14. The knob 50 allows the user to operate the press 16 as described in detail below. As shown in Figure 7B, the knob 50 includes an aperture 52 extending upward into the body of the knob that is sized to receive an upper end of a cylindrical plunger rod or shaft 20. In some embodiments, the knob 50 may include interior threads (not shown) surrounding the aperture 52 configured to threadably engage with exterior threads (not shown) disposed on the upper end of the shaft 20. The shaft 20 extends downward ward through the aperture 15 in the cap 14 and into the cavity 17 of the cap. In some embodiments, the cap 14 may include a gasket or other seal (not shown) to seal the interface between the aperture 15 and the shaft 20.

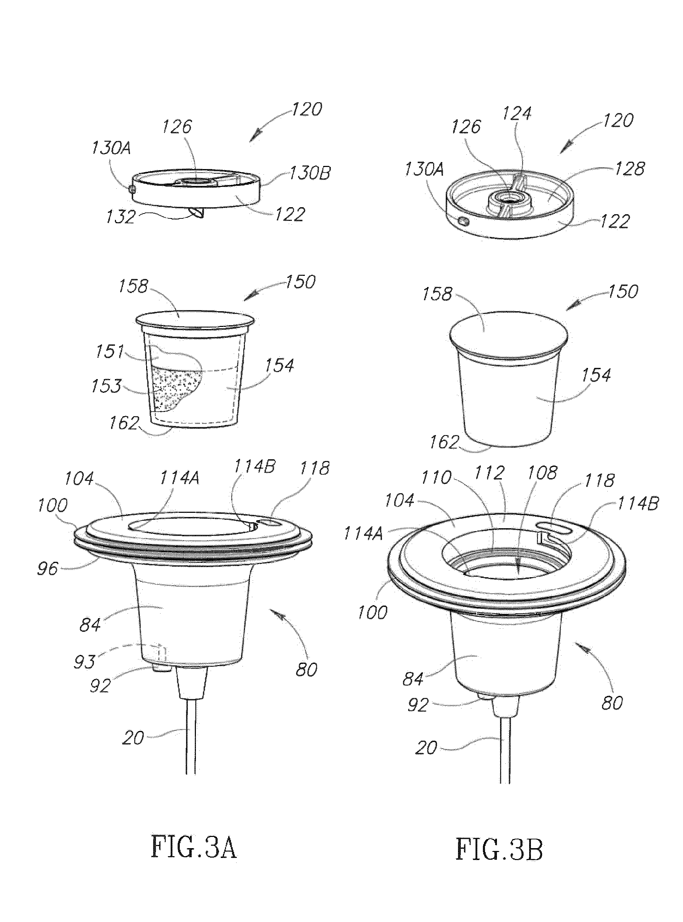

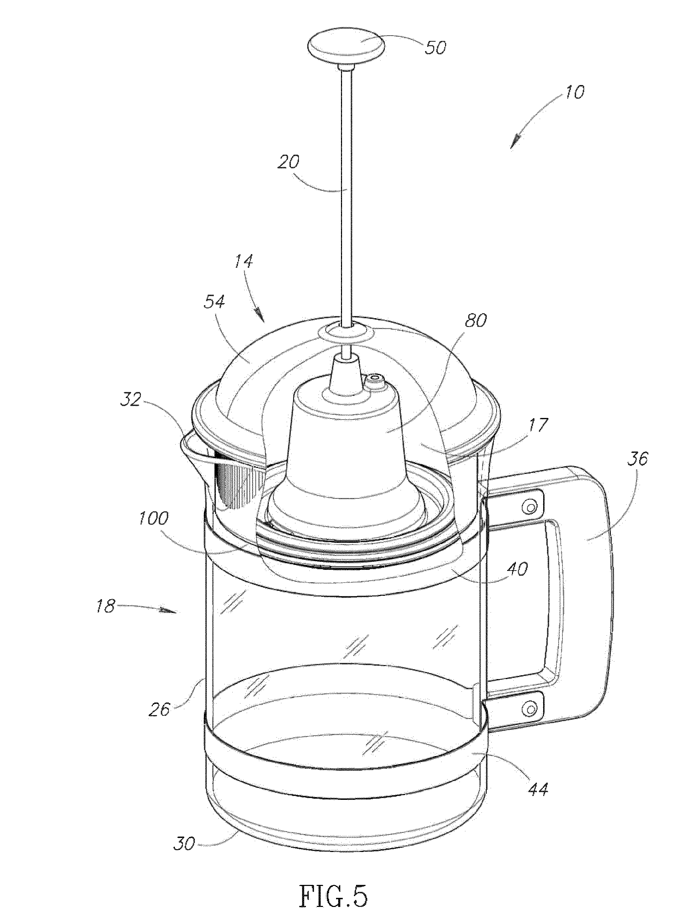

The opposite lower end of the shaft 20 is coupled to a plunger assembly 80 comprising a plunger body 84 and a removable plunger lid 120 (see Figures 3A and 3B). The plunger body 84 comprises a lower portion 96 having a flexible circumferential lip or seal 100 (e.g., made from silicone). The lower portion 96 and seal 100 are sized to closely fit within the interior sidewall 26 of the container 18 in order to form a slidable seal between the sidewall and the lower portion 96 of the plunger body 84. The press 16 is slidably mounted relative to the cap 14 such that the plunger assembly 80 is movable up and down within an interior cavity 60 of the container 18 when the cap is received on the container. As best illustrated in Figure 5, the plunger assembly 80 is positionable within the cavity 17 of the cap 14 when in a raised or starting position. The plunger assembly 80 is movable such that it may be pressed downward within the interior 60 of the container 18 by pressing downward on the knob 50 until the plunger is positioned approximately adjacent to the bottom wall 30 in a lowered or ending position, as shown in Figure 7B.

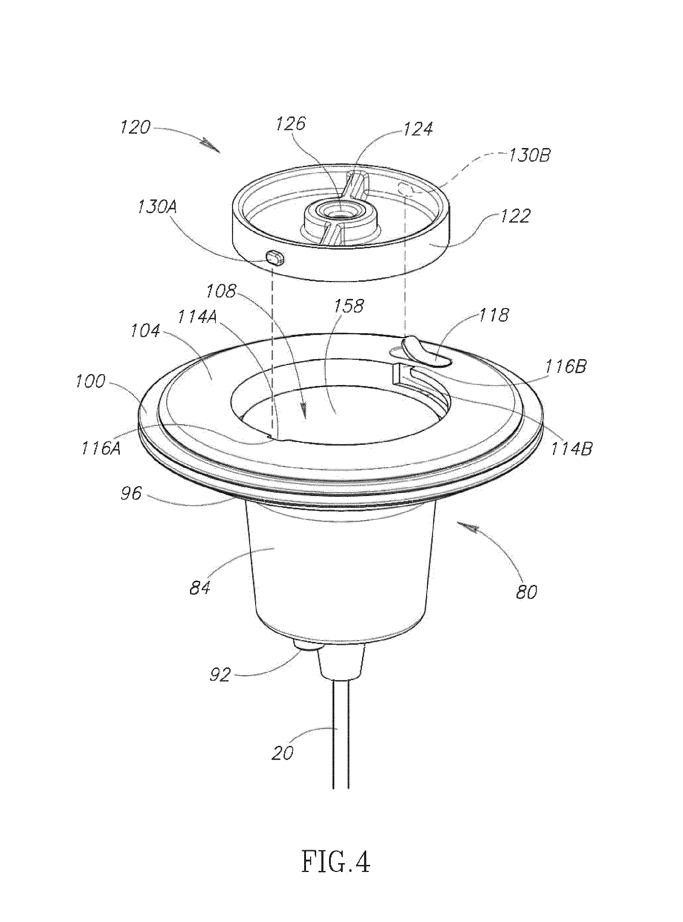

Referring now to Figures 3A, 3B, and 4, various bottom perspective views of the plunger assembly 80 are shown. In these views, the plunger assembly 80 is shown "upside-down" relative to its in-use position shown in other figures, such as Figure 1. In the upside-down position, the user may selectively remove the plunger lid 120 from the plunger body 84 to access an interior cavity 108 (see Figures 3B and 7B) of the plunger body to insert a brewing material pod 150 into the cavity and to remove the brewing material pod from the cavity.

As shown in in Figure 4, the plunger lid 120 includes an outer cylindrical sidewall 122 having spaced apart protrusions or locking tabs 130A and 130B projecting outwardly therefrom. The uppermost portion of the cavity 108 (as shown in Figure 4) includes an inner circumferential sidewall 112 that includes locking grooves 114A and 114B. Each of the locking grooves 114A and 114B is shaped and sized to receive one of the locking tabs 130A and 130B so that the plunger lid 120 may be selectively coupled to the plunger body 84. In this embodiment, the user may lower the plunger lid 120 into the cavity 108 while the locking tabs 130A and 130B are aligned with upward facing portions 116A and 116B (in the view of Figure 4) of the locking grooves 114A and 114B, respectively, that are in communication with a bottom surface 104 of the plunger body 84. The user may then rotate or twist the plunger lid 120 relative to the plunger body 84 so that the locking tabs 130A and 130B slide within the grooves 114A and 114B to secure the plunger lid to the plunger body. This connection may be referred to generally as a "twist lock." The plunger lid 120 also includes a raised handle portion 124 extending outwardly in opposite directions from a central aperture 126. The handle portion 124 provides a gripping surface for the user when the plunger lid 120 is being attached to or removed from the plunger body 84.

As shown in Figure 3A and 7B, the plunger lid 120 comprises a lower hollow punch 132 (or "liquid entry punch") in communication with the aperture 126. When the plunger lid 120 is coupled to the plunger body 84 as shown in Figure 7B, the hollow punch extends into the cavity 108 of the plunger body. The plunger body 84 also includes an upper hollow punch 93 (or "liquid exit punch") that is in communication with an aperture 92 disposed on a top surface 88 (as shown in Figure 7B) of the plunger 84.

Referring to Figures 3A and 3B, the brewing material pod 150 comprises a sidewall 154, a lid 158, and a bottom surface 162. The brewing material pod 150 may be constructed out of plastic, foil, a combination of the two, or any other suitable materials. The brewing material pod 150 includes a filter 151 positioned therein as well as a brewing material 153, such as ground coffee beans or tea leaves. When hot liquid is forced through apertures in the lid 158 and the bottom surface 162, the liquid passes through the brewing material 153 and the filter 151 to make a brewed beverage.

The operation of the beverage maker 10 is now described. The user may first remove the press 16 from the container 18, as shown in Figure 2. Then, the user may position the brewing material pod 150 into the cavity 108 of the plunger body 84 and couple the plunger lid 120 to the plunger body, as shown in Figures 3A and 4 and described above. As the user couples the plunger lid 120 to the body 84, the pod 150 is pressed into the cavity 108 such that the hollow punch 93 punctures the bottom surface 162 of the brewing material pod 150 and the hollow punch 132 of the plunger lid punctures the top surface or lid 158 of the brewing material pod, thereby providing a flow path through the plunger assembly 80 through the hollow punch 132, the pod 150, and the hollow punch 93.

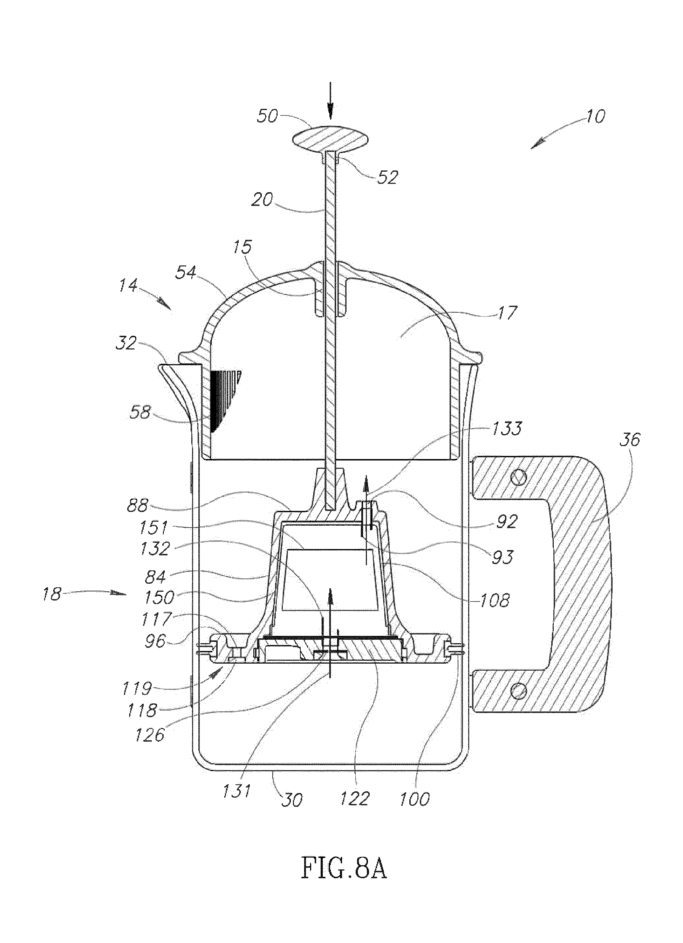

The user may then fill the container 18 with hot water (not shown) and position the press 16 over the mouth 58 of the container, as shown in Figure 5. A rim 56 of the cap 14 rests on top of the mouth 58 of the container 18 to support the press 16 on the container 18 and limit downward travel of the cap. The plunger 80 is initially in the raised or starting position as shown in Figure 5. As shown in Figure 8A, the user may then press down on the knob 50 to force the plunger assembly 80 including the brewing material pod 150 downward into the hot water. As the plunger assembly 80 is forced downward, the hot water therebelow is forced through into the hollow punch 132 of the plunger assembly 80, through the brewing material pod 150 in the direction shown by the arrow 131, and out of the brewing material pod via the hollow punch 93 and the aperture 92 in the direction of the arrow 133. The user may continue to press downward on the knob 50 until the plunger assembly 80 is substantially adjacent to the bottom surface 30 of the container 18, as shown in Figure 7B.

Once the plunger 80 has been pressed downward to the bottom surface 30 of the container 18, substantially all of the hot water in the container will have been forced through the plunger assembly 80 and the brewing material pod 150 to brew the beverage. The user may then pour the beverage through a pouring screen 58 in the lower circumferential sidewall 62 of the cap 14 and over the pouring lip 32 of the container when the pouring screen 58 and the pouring lip 32 are substantially aligned with each other.

Once the beverage has been poured, the user may reverse the steps discussed above to remove the press 16 from the container 18 and then remove the used brewing material pod 150 from the plunger body 84. The process may then be repeated with a new brewing material pod 150 to prepare another beverage.

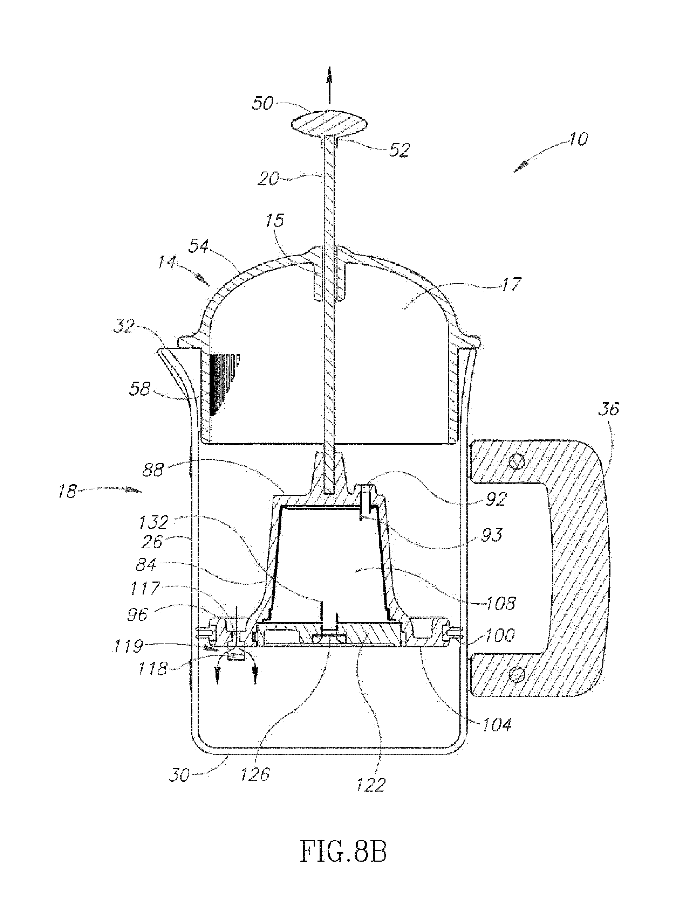

As discussed above, the lower portion 96 and seal 100 of the plunger body 84 are sized to closely fit within the interior sidewall 26 of the container 18 in order to form a slidable seal between the sidewall and the lower portion of the plunger. To eliminate the vacuum that would otherwise occur when the user attempts move the plunger assembly 80 upward from the lowered position for removal after a beverage has been prepared, a one-way valve 119 is provided on the lower portion 96 of the plunger assembly 80, as shown in Figures 7B, 8A and 8B. The one-way valve 119 comprises an air aperture 117 extending vertically through the lower portion 96 and a hinged flap 118 coupled to the bottom surface 104 that is configured to selectively cover the air aperture 117. In one embodiment, the hinged flap 118 is formed from silicone, but other materials may be used. As shown in Figure 8B, when the plunger is raised by the user (i.e., after a beverage has been prepared and poured), the air pressure differential above and below the plunger assembly 80 causes the flap 118 of the one-way valve 119 to open so that air may pass from the volume above the plunger to the volume below the plunger, thereby preventing a vacuum from being formed below the plunger assembly. The flap 118 is also shown in the open position in Figure 4 for illustrative purposes. Conversely, as shown in Figure 8A, when the plunger assembly 80 is being forced downward during preparation of a beverage, the pressure from the air and then liquid below the plunger assembly 80 forces the hinged flap 118 to close and therefore block the aperture 117. Thus, the hot water is forced only through the brewing material pod 150 and does not pass through the one-way valve 117.

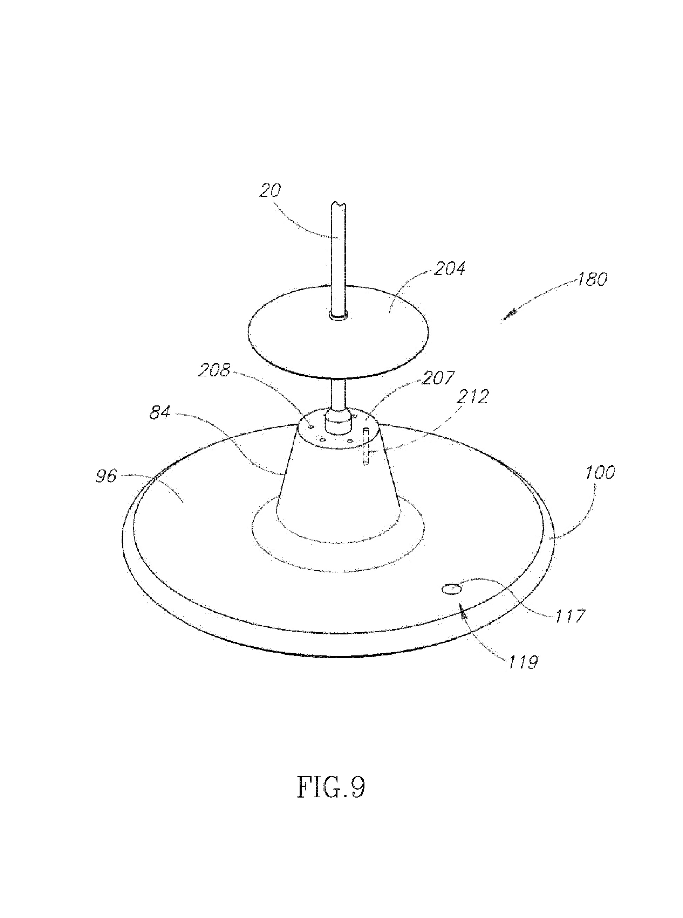

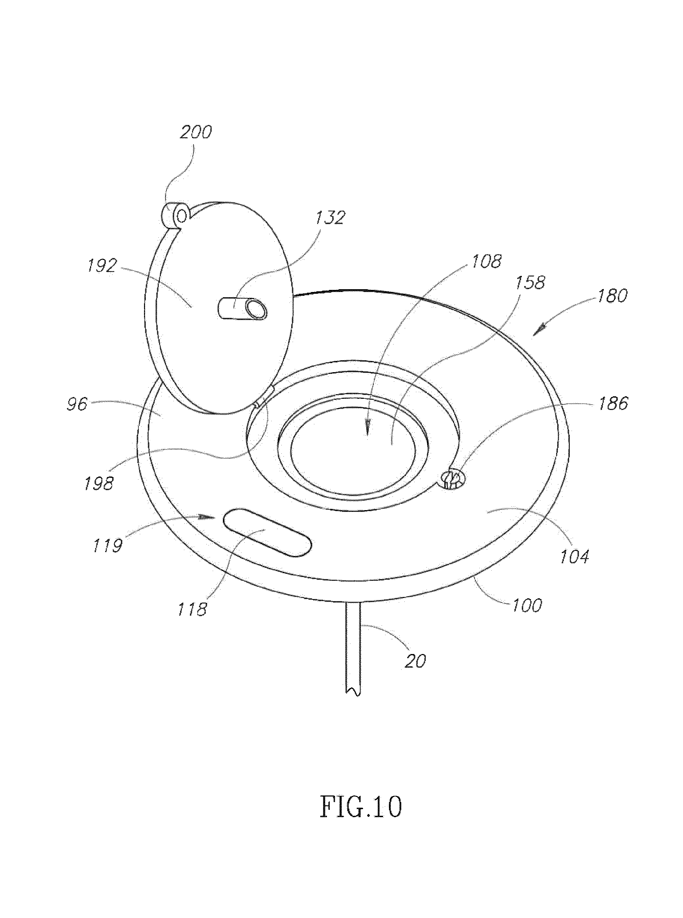

Figures 9 and 10 illustrate a second embodiment of a plunger assembly 180. This embodiment is similar to the previously described embodiment, so only differences between the two embodiments are described herein. Further, similar or identical components in this embodiment are referenced with like numerals. In this embodiment, a top surface 207 of the plunger body 84 comprises a plurality of apertures 208 each coupled to a hollow punch 212. Only a single hollow punch 212 is shown in dashed lines in Figure 9 for clarity, but it will be appreciated that each of the apertures 208 are coupled to a separate hollow punch 212. The hollow punches 212 are configured to puncture the bottom surface 162 of the brewing material pod 150 when the brewing material pod is positioned within the cavity 108 of the plunger 180 assembly.

In this embodiment, the plunger assembly 180 also comprises a deflector 204 coupled to the shaft 20 and disposed above the apertures 208 in the top surface 207. The deflector 204 is configured to re-direct liquid expelled upward from the apertures 208 downward as the plunger assembly 180 moves downward and the hot water is forced therethrough.

As shown in Figure 10, the plunger assembly 180 includes a plunger lid 192 that is hingedly coupled to the lower portion 96 of the plunger by a hinge 198. The plunger lid 192 also includes a clip aperture 200 configured for selective coupling with a tab clip 186 with two arms positioned on the bottom surface 104 of the lower portion 96 of the plunger 180. To close the plunger lid 192, the user may rotate the lid about the hinge 198 and press downward on the lid so that the clip aperture 200 receives the tab clip 186 and locks the plunger lid in place covering the cavity 108. To open the plunger lid 192, the user may simply squeeze together the arms of the tab clip 186 so that the tab clip may be released from the tab aperture 200 and the lid can be rotated in an upward direction to provide access to the interior cavity 108 of the plunger 180. It will be appreciated that other devices operative to selectively secure the plunger lid 192 in the closed position may be used.

The foregoing described embodiments depict different components contained within, or connected with, different other components. It is to be understood that such depicted architectures are merely exemplary, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality.

While particular embodiments of the present invention have been shown and described, it will be obvious to those skilled in the art that, based upon the teachings herein, changes and modifications may be made without departing from this invention and its broader aspects and, therefore, the appended claims are to encompass within their scope all such changes and modifications as are within the true spirit and scope of this invention. Furthermore, it is to be understood that the invention is solely defined by the appended claims. It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.).

It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations).

## Claims

1. A beverage maker for brewing a beverage utilizing a brewing material pod that includes an interior portion having a filter and a brewing material, the beverage maker comprising:
a container having a bottom portion and a sidewall forming a cavity;
a plunger assembly slidably mounted to the container for movement within the cavity between a raised position in which the plunger assembly is disposed proximate to an upper portion of the container, and a lowered position in which the plunger assembly is disposed substantially adjacent to the bottom portion of the container, the plunger assembly being sized to form a slidable seal between the plunger assembly and an interior surface of the sidewall of the container as the plunger assembly moves between the raised position and the lowered position, the plunger assembly comprising a brewing material pod cavity sized for removable receipt of the brewing material pod, the plunger assembly further including first and second hollow punches extending therethrough, the first and second hollow punches being operative to puncture a first surface and second surface, respectively, of the brewing material pod when the brewing material pod is positioned within the brewing material pod cavity to provide a flow path in the cavity of the container through the first hollow punch, the brewing material pod, and the second hollow punch.

2. The beverage maker of claim 1, further including a cap, and
wherein the container has a top-opening mouth for receiving a quantity of a liquid into the cavity of the container, and the cap is sized to fit over the mouth of the container, and wherein the plunger assembly includes a plunger body and a plunger lid operative to selectively cover the brewing material pod cavity, the plunger body having the brewing material pod cavity therein sized for selective receipt of the brewing material pod and including the second hollow punch, the second hollow punch being a hollow liquid exit punch extending through the plunger body, the first hollow punch being a hollow liquid entry punch extending through the plunger lid, the liquid exit punch being operative to puncture the first surface of the brewing material pod and the liquid entry punch being operative to puncture the second surface of the brewing material pod at a location opposite the first surface when the brewing material pod is positioned within the brewing material pod cavity and the plunger lid is covering the brewing material pod cavity to provide a flow path through the liquid entry punch, the brewing material pod, and the liquid exit punch, the plunger assembly being slidably mounted to the cap for movement between the raised position in which the plunger assembly is disposed proximate to or within the cap, and the lowered position in which the plunger assembly is disposed substantially adjacent to the bottom portion of the container.

3. The beverage maker of claim 1 or 2, wherein the plunger assembly comprises a flexible lip portion configured to contact the interior surface of the sidewall of the container as the plunger assembly moves between the raised position and the lowered position to provide the slidable seal.

4. The beverage maker of claim 1, wherein the container comprises a pouring spout, the beverage container further comprising a cap coupled to the plunger assembly and sized to fit over the mouth of the container, the cap including a lower circumferential sidewall that is smaller than an upper portion of the sidewall of the container such that the lower circumferential sidewall fits within the mouth of the container, the lower circumferential sidewall of the cap further comprising a pouring grate through which liquid can pass to facilitate pouring a beverage out of the container when the pouring grate is substantially aligned with the pouring spout.

5. The beverage maker of claim 1 or 2, further comprising a deflector positioned above the plunger assembly, the deflector being operative to deflect liquid that is expelled upward from one of the first and second hollow punches downward as the plunger assembly is moved toward the lowered position.

6. The beverage maker of claim 1, wherein the plunger assembly comprises a plunger body and a plunger lid configured to selectively cover the brewing material pod cavity.

7. The beverage maker of claim 1 or 2, wherein the plunger assembly comprises a one-way valve that selectively provides a flow path through the plunger assembly when the plunger assembly is positioned inside the container, the one-way valve being configured to open the flow path when the pressure below the plunger assembly is less than the pressure above the plunger assembly, and to close the flow path when the pressure below the plunger assembly is greater than the pressure above the plunger assembly.

8. The beverage maker of claim 2, wherein the cap includes an upper portion that arches upward toward the center of the cap to form a cavity within the interior of the cap sized to receive at least a portion of the plunger assembly.

9. The beverage maker of claim 2, wherein the cap includes a lower circumferential sidewall that is smaller than an upper portion of the sidewall of the container such that the lower circumferential sidewall fits within the mouth of the container, and wherein the container comprises a pouring spout, and the lower circumferential sidewall of the cap comprises a pouring grate through which liquid can pass to facilitate pouring a beverage out of the container when the pouring grate is substantially aligned with the pouring spout.

10. The beverage maker of claim 1 or 2, wherein the container comprises a pouring spout and a handle positioned on a side of the container opposite the pouring spout.

11. The beverage maker of claim 2, wherein the plunger body comprises a plurality of liquid exit punches each configured to puncture the first surface of the brewing material pod when the brewing material pod is positioned within the brewing material pod cavity and the plunger lid is covering the brewing material pod cavity.

12. The beverage maker of claim 2, wherein the cap comprises an aperture, and the beverage maker further comprising a shaft extending through the aperture, and a knob coupled to the shaft above the cap, the plunger body being coupled to the shaft below the cap.

13. The beverage maker of claim 2, further comprising a deflector coupled to the shaft and positioned below the cap and above the plunger body, the deflector being operative to deflect liquid that is expelled upward from the liquid exit punch downward as the plunger assembly is moved toward the lowered position.

14. The beverage maker of claim 2, wherein the plunger lid is selectively removable from the plunger body, and wherein the plunger lid comprises a locking protrusion, and the plunger body comprises a corresponding locking groove configured to receive the locking protrusion of the plunger lid to selectively secure the plunger lid to the plunger body.

15. A method for making a beverage utilizing a brewing material pod that includes an interior portion having a filter and a brewing material, the method comprising:
positioning the brewing material pod inside a brewing material pod cavity of a plunger body portion of a plunger assembly, the plunger body including first hollow punch extending therethrough, the plunger assembly being slidably coupled to a cap;
securing a plunger lid to the plunger body to cover the brewing material pod cavity and the brewing material pod positioned therein, the plunger lid including a second hollow punch, wherein securing the plunger lid to the plunger body causes the first hollow punch to puncture a first surface of the brewing material pod and the second hollow punch to puncture a second surface of the brewing material pod different from the first surface;
pouring a quantity of a hot liquid into a container having a bottom portion, a sidewall, and a top-opening mouth;
placing the cap over the mouth of the container such that the plunger assembly is in a raised position in which the plunger assembly is disposed proximate to or within the cap, the plunger assembly being sized to form a slidable seal between the plunger assembly and an interior surface of the sidewall of the container as the plunger assembly moves between the raised position and a lowered position in which the plunger assembly is disposed substantially adjacent to the bottom portion of the container; and
pressing downward on the plunger assembly to move the plunger assembly from the raised position to the lowered position, wherein the hot liquid flows from the second hollow punch, through the brewing material pod, and through the first hollow punch to brew the beverage as the plunger assembly is moved downward toward the lowered position.
